# EUROPEAN PATENT SPECIFICATION

(11) **EP 4 817 314 B1**
(45) Date of publication and mention of the grant of the patent: **02.12.2026**
(21) Application number: 25715758.6
(22) Date of filing: 19.03.2025
(51) Int. Cl.: H04W 24/02, H04W 52/02

(54) **ENERGY SAVING IN A CELLULAR COMMUNICATION NETWORK**
ENERGIEEINSPARUNG IN EINEM ZELLULAREN KOMMUNIKATIONSNETZWERK
ÉCONOMIE D'ÉNERGIE DANS UN RÉSEAU DE COMMUNICATION CELLULAIRE

(30) Priority: 21.03.2024 FI 20245325
(43) Date of publication of application: 07.10.2026
(73) Proprietor: Elisa Oyj, 00520 Helsinki (FI)
(72) Inventor: JOKELA, Tommi, 00520 Helsinki (FI)
(74) Representative: Laine IP Oy
(86) International application number: PCT/FI2025/050137
(87) International publication number: WO 2025/196373

(56) References cited:
- MODERATOR (QUALCOMM ET AL: "FL Summary of RAN1 103-e agreements and email discussions on Rel-17 SI on XR evaluations for NR", vol. RAN WG1, no. e-Meeting; 20201026 - 20201113, 19 November 2020 (2020-11-19), XP051955963, Retrieved from the Internet <URL:https://ftp.3gpp.org/tsg_ran/WG1_RL1/TSGR1_103-e/Docs/R1-2009812.zip R1-2009812 FL summary of RAN1 103-e for Rel-17 XR SI.docx> [retrieved on 20201119]
- ALSUKAYTI IBRAHIM S: "Quality of Service Support in RPL Networks: Standing State and Future Prospects", JOURNAL OF COMPUTER SCIENCE AND TECHNOLOGY, SPRINGER SINGAPORE, SINGAPORE, vol. 37, no. 2, 31 March 2022 (2022-03-31), pages 344 - 368, XP037804932, ISSN: 1000-9000, [retrieved on 20220331], DOI: 10.1007/S11390-022-1027-Y
- SHAHID MUMTAZ ET AL: "D3.2: SPEED-5G enhanced functional and system architecture, scenarios and performance evaluation metrics", ARXIV.ORG, CORNELL UNIVERSITY LIBRARY, 201 OLIN LIBRARY CORNELL UNIVERSITY ITHACA, NY 14853, 9 November 2017 (2017-11-09), XP081286884

## Description

### FIELD

The present disclosure relates to cellular communication networks and more specifically, to energy saving in such networks.

### BACKGROUND

Communication networks may comprise at least core networks and, in some networks, also Radio Access Networks, RANs. For example, cellular communication networks comprise a core network tasked with functions affecting the network as a whole, while a RAN enables connectivity to the network to subscribers with User Equipments, UEs, furnished with radio communication capabilities. Energy saving is important at least in cellular communication networks, to avoid wasting energy unnecessarily. There is therefore a need in general to provide enhancements for energy saving in cellular communication networks.

MODERATOR (QUALCOMM ET AL: "FL Summary of RAN1 103-e agreements and email discussions on Rel-17 SI on XR evaluations for NR", 3GPP, R1-2009812, October 26 - November 13, 2020, presents the outcome of RAN1 #103-e. ALSUKAYTI IBRAHIM S: "Quality of Service Support in RPL Networks: Standing State and Future Prospects", JOURNAL OF COMPUTER SCIENCE AND TECHNOLOGY, SPRINGER SINGAPORE, vol. 37, no. 2, 31 March 2022, pages 344-368, presents a review of the proposed solutions.

### SUMMARY

According to some aspects, there is provided the subject-matter of the independent claims. Some embodiments are defined in the dependent claims.

According to a first aspect of the present disclosure, there is provided a computer-implemented method for controlling a cellular communication network, the method comprising determining a first statistical model for a customer experience value for each combination of a load and an active frequency layer in a sector of the cellular communication network using aggregated sector trend data of the sector, wherein said aggregated sector trend data is generated by aggregating cell counters for sector-level, determining a second statistical model for an energy consumption value for each combination of the load and the active frequency layer in the sector of the cellular communication network using said aggregated sector trend data of the sector, determining a simulated customer experience value and a simulated energy consumption value for a range of energy saving parameters of the sector using at least the first and the second statistical models, selecting an energy saving parameter for the sector from the range of energy saving parameters using the simulated customer experience value and the simulated energy consumption value and controlling the cellular communication network using at least the selected energy saving parameter.

### BRIEF DESCRIPTION OF THE DRAWINGS

FIGURE 1 illustrates an example of a cellular communication network in accordance with at least some embodiments;
FIGURE 2 illustrates an example of a block diagram in accordance with at least some embodiments;
FIGURE 3 illustrates an example apparatus capable of supporting at least some embodiments; and
FIGURE 4 is a flow graph of a computer-implemented method for controlling a cellular communication network in accordance with at least some embodiments.

### EMBODIMENTS

Energy saving in cellular communication networks may be enhanced by the procedures described herein. More specifically, the procedures described herein enable energy savings by controlling a cellular communication using at least a selected energy saving parameter, such as a load threshold or a shutdown window, for example by providing a way to shut down a cell of a sector based on a load situation. In particular, a cell may be configured to perform cell shutdown efficiently by exploiting a statistical-based approach, preferably together with a simulation-based approach.

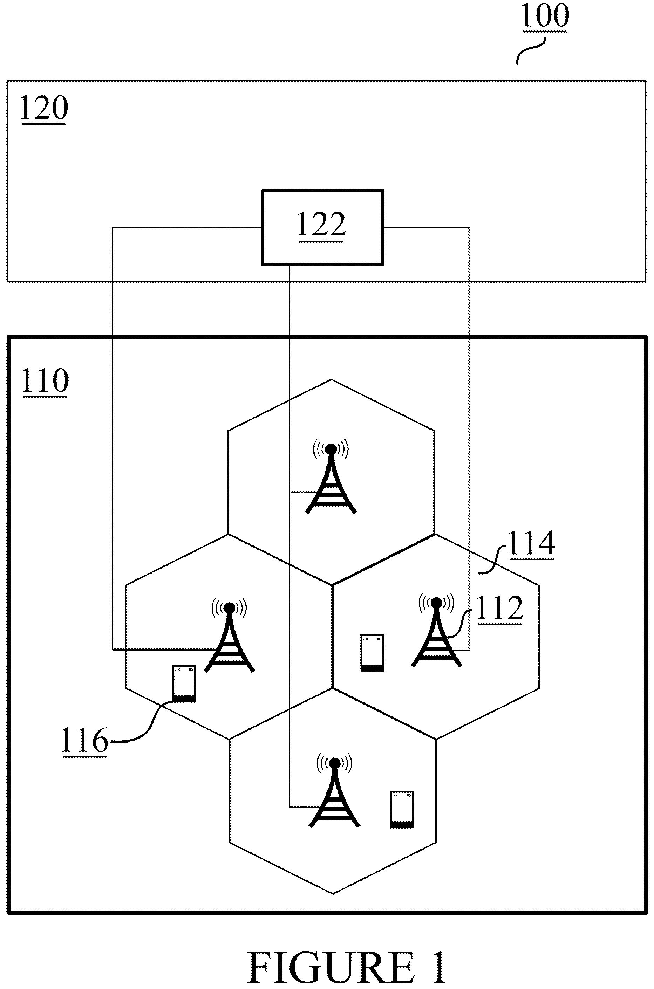

FIGURE 1 illustrates an example of a cellular communication network in accordance with at least some embodiments. FIGURE 1 illustrates cellular communication network 100 comprising Radio Access Network, RAN, 110 and core network 120. RAN 110 further comprises multiple Base Stations, BSs, 112. BSs 112 are configured to operate in accordance with a cellular communication standard, such as 2G, 3G, Long Term Evolution, LTE, 4G, or fifth generation, 5G, also known as New Radio, NR, or any other standard in the future, for example as specified by the 3^{rd} Generation Partnership Project, 3GPP. Each BS 112 is associated with at least one cell 114. That is, each BS 112 is configured provide at least one cell 114 for communication. Communication network 100 may be a single-operator network or a multi-operator network.

In cellular communication network 100 illustrated in FIGURE 1, each BS 112 provides one cell for communication. In some embodiments, each BS 112 may provide for example three cells for communication, wherein said three cells provide coverage with an angle of 120 degrees using different frequencies. In some networks, different BSs may be configured to provide different numbers of cells, such as sectorized cells or overlapping cells on different frequency ranges.

RAN 110 is further in communication with one or more User Equipments, UEs, 116. BSs 112 communicate with UEs 116 over an air interface wirelessly using radio communications, within cells 114. Each UE 116 comprises, or is incorporated into, for example, a smartphone, feature phone, tablet or laptop computer, Internet-of-Things, IoT, node, smart wearable or a connected car connectivity module. Naturally, separate UEs 116 need not be of a same type.

BSs 112 of RAN 110 are coupled with core network nodes of core network 120 via links, which may comprise wire-line connections, for example. A few of such links are illustrated in FIGURE 1. Core network 120 comprises for example Mobility Management Entities, MMEs, serving gateways and/or Access and Mobility management Functions, AMPs, for example. The core network may comprise a gateway, enabling communication with further networks, via at least one inter-network link. Some aggregate networks may have more than one core network, which are then connected to each other using at least one communication link.

Core network 120 illustrated in FIGURE 1 further comprises apparatus 122. Apparatus 122 may be configured to monitor cellular communication network 100, in particularly RAN 110. Apparatus 122 may be configured to perform actions to optimize the operation of RAN 110. For instance, apparatus 122 may be an apparatus for network optimization of RAN 110, such as for configuring at least one cell 114 to perform cell shutdown in accordance with a shutdown configuration selected by apparatus 122. In some embodiments, apparatus 122 may be located in RAN 110 or outside of cellular communication network 100.

Cell shutdown refers to a RAN energy saving feature, which aims at dynamically activating and deactivating a sector capacity of BS 112 based on a current load situation. Deactivation of at least one cell 114 reduces the energy consumption of RAN 110. In some embodiments of the present disclosure, BS-level solutions may be used for the cell shutdown. Such solutions may be referred to as distributed Self Organizing Network, SON, solutions. SON solutions may be controlled by a centralized SON apparatus, such as apparatus 122, which may adjust relevant configuration parameters dynamically, beyond their static values.

Shutting down a cell, such as cell 114, may refer to a full or partial shutdown. Partial shutdown may comprise, e.g., shutting down one or more Multiple Input Multiple Output, MIMO, antenna branches in the cell. In case of the partial shutdown, the cell does not fully disappear from RAN 110 but continues to provide service to a smaller area and/or on lower speed or throughput. In this way, disturbance caused by the cell shutdown to the neighbourhood may be reduced. In case of the full shutdown, the cell would fully disappear from RAN 110 as all of the MIMO antenna branches would be shutdown.

In some embodiments, an algorithm of a vendor of a distributed SON may be configured either on a cell or a sector level, depending on the vendor. The method of the present disclosure may control the algorithm of the vendor of the distributed SON by changing parameters, such as a load threshold and a shutdown window. The algorithm of the vendor of the distributed SON may, when configured properly, shut down cells of a sector one at a time when the load decreases but leave at least one frequency on, e.g., the lowest frequency. The algorithm of the vendor of the distributed SON might not shut down the entire sector ever, because that would cause losing of the coverage/connection from a part of the users.

The method of the present disclosure may be a centralized SON algorithm and used to choose parameters of the control the algorithm of the vendor of the distributed SON at a sector level, because optimization per cell might not be a realistic option due to complexity issues. If the algorithm of the vendor of the distributed SON is configured per cell, each cell may get a sector-level parameter, such as a load threshold is 40%, for each cell of the sector.

As an example, one configuration parameter may be a load threshold, which may be used to control activation and deactivation of the cell shutdown, e.g., based on a measured cell utilization. If the load of cell 114 is less than the load threshold, cell 114 may be shutdown. Thus, less energy would be saved if the load threshold is too low. On the other hand, if the load of cell 114 is larger than the load threshold, shutdown of cell 114 might not be allowed. Hence, if the load threshold is too high, a Quality of Service, QoS, would not meet operator policies and/or Service Level Agreements, SLAs, with customers. An efficient centralized SON solution would need to address such a trade-off.

Another configuration parameter may be a shutdown window, which may set timewise boundaries for the cell shutdown. The shutdown window may be determined and set by apparatus 122. Outside of the set shutdown window, cell 114 is not allowed to be shutdown, even if the load of cell 114 would be at an acceptable level for the shutdown, i.e., below the load threshold. Within the set shutdown window, cell 114 may be shutdown when the load of cell 114 is below the load threshold. At least in case of a centralized SON, the shutdown window may be seen as a secondary safeguard that should not limit the threshold-based shutdown significantly, but should avoid shutting down cell 114 at times of day when there are no real possibilities for the energy savings.

At least one challenge with any centralized cell shutdown solution is to predict an impact of a given shutdown configuration to Customer Experience, CX. In some embodiments of the present disclosure, CX values may refer to Downlink Average User Throughput, DAUT, values. It would be important to predict the impact of the given shutdown configuration to CX, to ensure that an amount of saved energy and the CX value are in balance, e.g., to comply with policies of a network operator.

In some embodiments of the present disclosure, historic utilization, such as relative Physical Resource Block, PRB, utilization and CX statistics, like DAUT, may be exploited to predict the impact of the given shutdown configuration on CX and saved energy. Historic utilization may be used in a statistical approach, by using a statistical model for determining a statistical CX value and a statistical amount of saved energy. The statistical approach may provide good results at least in some scenarios.

However, at least in some scenarios, some important nuances of a distributed SON feature behaviour may be lost if the statistical approach is used only, without further enhancements. The scenarios in which the use of statistical approach may be used efficiently may thus become limited in the selection of CX criteria that the solution can guarantee. In some scenarios, it may only be possible to guarantee a lower bound, such as the minimum throughput on the lowest frequency layer, but no upper bound. Guaranteeing the lower bound may be used to ensure that users on the lowest frequency get the minimum throughput with a certain probability. Guaranteeing the lower bound only might not be in line with the operator's perception of the CX target though, and hence it may become impossible for the solution to guarantee a negotiated CX level.

In some embodiments, the limitations of a purely statistical model may be lifted by a Machine Learning, ML, -based model that would better emulate the properties of a distributed SON algorithm of a vendor. However, it may be extremely challenging to create a global ML model that would provide accurate prediction of CX for a given shutdown configuration, for example due to specific characteristics, such as propagation, topology, hardware, etc., of cell 114 of BS 112. Hence, the statistical model should be specific to a sector, i.e., cell 114 of BS 112, but that would lead to a computational problem because RAN 110 may comprise tens of thousands of sectors.

In some embodiments, the limitations of a purely statistical model may be lifted by adapting a shutdown configuration in a control loop fashion, step-by-step. However, in such a case it may take time to converge to its steady state value. Also, stability of the steady state (e.g., oscillations etc.) and tendency to shape the traffic between sectors may be issues as well.

In some embodiments, the statistical approach may be exploited together with a simulation-based approach, to configure cell 114 to perform cell shutdown efficiently. Mapping of the CX and energy consumption to a certain cell shutdown configuration may be performed by a combination of simulation- and statistical-based approaches. By using the statistical-based approach together with the simulation-based approach, non-deterministic aspects of the cell shutdown, such as network traffic, propagation, hardware and/or UEs, may be modelled using a statistical model while deterministic behaviour of the cell shutdown may be modelled using simulations.

The statistical-based approach may comprise using, by apparatus 122, a first and a second statistical model. The statistical models may be used to predict how much a CX value is with a certain sector load, assuming a certain number of active frequency layers. Thus, the statistical models may be referred to as prediction models. The prediction may be performed using linear or non-linear regression, or for example an ML model, wherein the features are related to loading of the sector and labels are CX Key Performance Indicators, KPIs, such as throughput or something else, like video streaming quality, etc.

The simulation-based approach may comprise performing, by apparatus 122, simulations. The simulations may be performed to imitate the operation of vendor of the distributed SON, with a reasonable accuracy and complexity. For example, for each time step a certain PRB utilization may be calculated and compared to each threshold. Frequencies may be added or removed from active layers depending on the result of the comparison. CX values, such as throughput, may also be calculated for each time step, because the number of active frequency layers is known based on the simulations.

In some embodiments, a CX target may be expressed in terms of at least one KPI, such as DAUT, for simplicity. Embodiments of the present disclosure are not limited to any particular KPI though. Moreover, any available data source may be used, such as RAN performance management data, RAN protocol traces, minimization of drive tests data, core network protocol traces, drive tests and/or application-level UE feedback.

The data may need to be tied to a certain cell and have time stamps. For example, the statistical model may be based on data associated with cell 114. The data may comprise any data which describes the load of the sector of cell 114 and any data which describes CX. Time stamps of the data may be exploited by apparatus 122 to estimate how the load of cell 114 varies in time. For example, the load of cell 114 may be lower during night times and higher during the day. Also, the load of cell 114 may be lower during the weekends than during working days, or vice versa, depending on the location of cell 114. In some embodiments, it may be further beneficial if the data has a meaningful correlation with the load of the cell. For example, the data may be related to cell 114 and historic DAUT of UEs 116 served by cell 114.

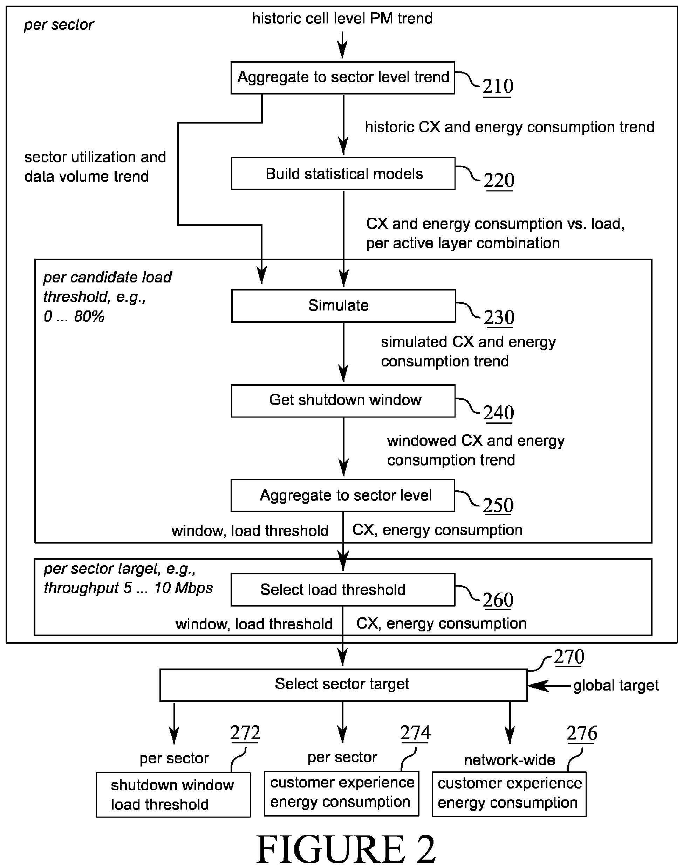

FIGURE 2 illustrates an example of a block diagram in accordance with at least some embodiments. Steps of FIGURE 2 may be performed by apparatus 122.

At step 210, apparatus 122 may aggregate to a sector level trend. As an input for step 210, apparatus 122 may receive a historic cell level Performance Management, PM, data. The historic cell level PM data may comprise, e.g., Operational Support Systems, OSS, counters, such as PRB utilization, throughput time, data volume, etc. Apparatus 122 may fetch the historic cell level PM trend, i.e., raw PM data, for each cell in the sector. Timewise, the historic cell level PM data may cover at least a few weeks of data, and any unusual periods of traffic may be filtered out. From the raw PM data, apparatus 122 may determine aggregated sector trend data for each sector, e.g., downlink data volume, downlink throughput time, downlink PRB utilization, cell shutdown time, and energy consumption. The algorithm of the present disclosure operates per sector but the used PM counters may be per cell and hence, cell counters may be aggregated for sector-level, to generate said aggregated sector trend data, at step 210.

In some embodiments, apparatus 122 may determine, from a cell shutdown time, a Combination of Active frequency Layers, CAL, at certain point of time, i.e., the cell shutdown state. Apparatus 122 may then then generate said aggregated sector trend data by aggregating downlink data volume, downlink throughput time, downlink PRB utilization per sector, and energy consumption, to compute DAUT.

At step 220, apparatus 122 may build statistical models. Apparatus may build statistical models for each sector. Apparatus 122 may determine a first statistical model for a CX value for each combination of a load and an active frequency layer in a sector of the cellular communication network using aggregated sector trend data of the sector. Apparatus 122 may also determine a second statistical model for an energy consumption value for each combination of the load and the active frequency layer in the sector of the cellular communication network using said aggregated sector trend data of the sector.

Apparatus 122 may determine using the statistical models, a statistical CX value and a statistical amount of saved energy for each of multiple shutdown configurations of the sector of cellular communication network 100. Therefore, the statistical models may be created, wherein the statistical models map a load of the sector to DAUT and energy consumption, per each possible CAL. CAL may refer to frequencies which would be used at the sector at a certain time.

In some embodiments, the statistical models may be based on data associated with the sector. Said data may be associated with time stamps and/or correlate with a load of the sector. Alternatively, or in addition, said data may correlate with a load of the sector. Apparatus 122 may determine, using the statistical models, the statistical CX values and the statistical amounts of saved energy based on said data from at least one day, preferably from at least one week, such as two weeks.

In some embodiments, apparatus 122 may determine, using the statistical models, the statistical CX values and the statistical amounts of saved energy at least in part by filtering out data diverging from averaged data by more than a threshold. Thus, apparatus 122 may filter out data that is uncommon during operation of the sector, thereby enabling configuring the sector to perform cell shutdown efficiently.

In some embodiments, apparatus 122 may determine, using the statistical model, the statistical CX values and the statistical amounts of saved energy for each possible CALs at least one point of time.

In some embodiments, apparatus 122 may build a downlink PRB utilization versus DAUT model per each CAL. For example, if the CX is measured in terms of downlink throughput and the downlink throughput has a linear relationship to downlink PRB utilization, apparatus 122 may apply linear regression with x-axis intercept fixed to 0, to approximate sector throughput at a given load and given number of active layers. It is noted that the load and the CX might not need to have a linear relationship, but any relationship with a meaningful non-linear correlation may be exploited. Energy consumption may be modelled in a similar manner, but applying a non-linear model.

A particular situation arises if there is no data to model a certain CAL. In such cases, apparatus 122 may determine that there is no data to model at least one possible CALs at a certain point of time and further determine a CX value for the at least one possible CALs, for which there is no data for modelling, based on a closest CAL, to enable configuring the sector to perform cell shutdown efficiently. For example, the CX may be approximated based on the CX of a "closest" CAL, for example 800 MHz + 1800 MHz + 2100 MHz in the case of 800 MHz +1800 MHz. This may not be an essential limitation though, as the data for a missing layer combination may be autonomously populated when the algorithm converges closer to that utilization range.

The "closest" CAL may thus refer to a similar combination of active frequency layers. For example, if there is no data for the 800 MHz +1800 MHz combination, data for the 800 MHz + 1800 MHz + 2100 MHz combination may be used, because 1800 MHz and 2100 MHz are quite close to each other.

At step 230, apparatus 122 may perform simulations. Apparatus 122 may determine a simulated CX value and a simulated energy consumption value for a range of energy saving parameters of the sector using at least the first and the second statistical models. The energy saving parameters may correlate with a load of the sector. For example, the energy saving parameters may comprise at least one of load thresholds or shutdown windows. In general, a vendor may use any relevant energy saving parameter, which can be adjusted, as long as the used energy saving parameter correlates with the load of the sector.

Thus, apparatus 122 may, for example, determine a simulated CX value and a simulated amount of saved energy for each of said multiple shutdown configurations of the sector. Apparatus 122 may determine the simulated CX value and the simulated amount of saved energy for each of said multiple shutdown configurations of the sector by simulating a range of load thresholds. For example, apparatus 122 may simulate DAUT and energy consumption for a reasonable range of load thresholds, e.g., 0-80 %. That is, apparatus 122 may perform simulations using one of the load thresholds at a time, to get simulation results for each of the load thresholds. For the simulation, apparatus 122 may exploit the sector utilization and data volume trends along with the DAUT and energy consumption models created at step 210, as an input. Apparatus 122 may determine the simulated CX value and the simulated energy consumption value using at least one of a sector trend data of the sector or a sector load of the sector. The sector trend data of the sector may comprise at least one of a sector utilization of the sector or a data volume trend of the sector. In some embodiments, apparatus 122 may select the energy saving parameter, such as the load threshold, for a simulated sector target of the sector, wherein the simulated sector target is a condition imposed by the CX value and/or the energy consumption value.

In some embodiments, each simulation may have a length that fits to Central Processing Unit, CPU, processing time constraints of apparatus 122. The simulations may be limited from the lower end by the granularity of the input PM data at step 210, i.e., time bin, such as 1 hour. For each time bin, apparatus 122 may perform simulations to determine how many frequency layers are active, i.e., the number of CALs, by comparing sector utilization to the simulated load threshold.

Based on the frequency layer active status, apparatus 122 may perform simulations to assign a PRB utilization versus DAUT model to each time bin, and utilize that model to compute the DAUT. From the DAUT, and utilizing the knowledge of historic data volume, apparatus 122 may compute a throughput time. At this stage apparatus 122 may have all the required information for aggregating the throughput in later steps.

The energy consumption may be approximated in a similar manner, building a model at step 210, and using that model as a part of the simulation to get the energy consumption per each time bin. In case the energy consumption is available only at a level of BS 112, cell shutdown or active time may be utilized as an alternative energy consumption metric. The cell shutdown time may be approximated based on the knowledge of active layers at a given simulated time bin.

At step 240, apparatus 122 may determine at least one shutdown window. Apparatus 122 may determine a shutdown window for each load threshold candidate using the simulated CX value and the simulated amount of saved energy for each of said multiple shutdown configurations of cell 114. Apparatus 122 may further select an optimal shutdown window for each load threshold candidate, e.g., using the simulated active layer status history from step 230. Apparatus 122 may select the energy saving parameter, such as the load threshold, among all simulated energy saving parameters, like simulated load thresholds, based on a criterion that is aligned with polices of an operator regarding a trade-off between the CX value and the energy consumption value.

Apparatus 122 may determine the shutdown window based on various strategies, comprising:
- allow shutdown only when there is shutdown potential for all layers;
- allow shutdown when there is shutdown potential at least for one layer, such as the highest layer;
- expand shutdown X hours around the potential shutdown window;
- allow 24/7 shutdown if there are significant shutdown opportunities outside the main shutdown window;
- always include certain hours, such as night hours, to shutdown window, regardless of the actual opportunity.

Apparatus 122 may further apply the shutdown window to the DAUT and energy consumption trends from step 230. In some embodiments, apparatus 122 might not allow any shutdown outside the window. Apparatus 122 may recalculate the DAUT and energy consumption based on changed CAL states.

At step 250, apparatus 122 may aggregate to sector level. Apparatus 122 may perform steps 230 - 250 per candidate load threshold, e.g., 0 ... 80%. The inputs for step 250 may be, e.g., CX values as a function of time and energy consumption as a function of time. At step 250, statistical values may be calculated from these time series, such as an average, decile X, median, etc. Thus, apparatus 122 may, at step 250, create descriptive statistics.

At step 260, apparatus 122 may select at least one load threshold. Apparatus 122 may for example determine a load threshold for each of said multiple shutdown configurations of cell 114 such that apparatus 122 may further configure cell 114 to perform cell shutdown in accordance with the load threshold of a selected shutdown configuration. For example, if the load is below the load threshold, cell 114 may be shutdown. It is noted that the load threshold is merely used as an example in FIGURE 2 and any other energy saving parameter may be used similarly.

In some embodiments, apparatus 122 may select a load threshold per sector target, e.g., throughput, 5 ... 10 Mbps. Apparatus 122 may select a load threshold for the sector from the range of load thresholds using the simulated CX value and the simulated energy consumption value. Apparatus 122 may select the load threshold using CX values and/or energy consumption values aggregated per sector and per each load threshold candidate. For example, apparatus 122 may select the load threshold among all simulated load thresholds based on a criterion that is aligned with polices of an operator regarding a trade-off between the CX value and the energy consumption value. The range of load thresholds may thus comprise load thresholds between 5 and 20 Mbps, the range of load thresholds preferably being the same for all sectors in the cellular communication network.

Apparatus 122 may select a load threshold per each simulated sector target, wherein a sector target may imply a condition imposed to DAUT and/or energy consumption. As an input for the selection, apparatus 122 may take the DAUT and energy consumption aggregated per sector and per each load threshold candidate, from step 250. In some embodiments, the load threshold may be selected among all simulated thresholds based on at least one criterion that is aligned with the operator's polices regarding the DAUT vs. energy consumption trade-off. The at least one criterion may comprise, for example, at least one of the following:
- Absolute sector throughput target: equalization of the sector DAUT throughout the network may be attempted. It should be noted that such equalization might not possible for the sectors having too little capacity in relation to generated traffic. In such cases the cell shutdown may be disabled, yielding maximum available DAUT;
- Relative sector throughput target: the target for DAUT may be set relative to cell maximum capacity, which may be estimated based on DAUT with all layers active and no users in the cell;
- Fixed energy saving target: the target may be a fixed decrease in the sector energy consumption, or shutdown time, regardless of the throughput impact. Although such approach might not guarantee the DAUT at a sector level, it may still guarantee the DAUT at the network level, due to adaptation of the energy consumption decrease target itself, at step 270;
- Joint throughput/energy consumption target: the target is to aim for an optimal reduction in energy consumption, but with a controlled throughput impact. The target may be set for the energy consumption or shutdown time decrease rate, instead of the absolute value, to degrade DAUT the most when there is a good return in terms of energy consumption. To avoid an adverse DAUT impact, the primary target may be complemented with a secondary condition which limits the DAUT impact.

At step 270, apparatus 122 may select a sector target. For example, apparatus 122 may select the sector target, from the simulated CX values and the simulated amounts of saved energy, such that the selected sector target fulfils a global target best. The global target is the same for all sectors of the cellular communication network.

Apparatus 122 may control the cellular communication network using at least the selected energy saving parameter, such as the load threshold, and preferably using also the global target. In some embodiments, apparatus 122 may control the cellular communication network by selecting a sector target, e.g., from simulated CX values and simulated energy consumption values, that best fulfils the global target.

In some embodiments, apparatus 122 may aggregate the CX value and the energy consumption value for all candidate sector targets over the cellular communication network and pick a sector target that would best fulfil policies of an operator regarding a balance between the CX value and the energy consumption value.

For example, apparatus 122 may calculate, using an absolute sector throughput target, the DAUT and energy consumption for targets ranging between 5...20 Mbps for all sectors in the network. Apparatus 122 may then aggregate the DAUT and energy consumption for all candidate targets over the whole network and pick the one that would best fulfil the operator's policies regarding DAUT and energy consumption balance. In such a case, the operator may, e.g., pick a target that would for example:
- yield zero decrease in the network-wide DAUT, and preferably some decrease in the energy consumption;
- yield 2 Mbps decrease in the network-wide DAUT, and some more decrease in the energy consumption; or
- yield 5 % decrease in the energy consumption, and some decrease in the DAUT.

Thus, apparatus 122 may pick the sector target that yields a zero decrease in a network-wide customer experience value and a first decrease in a network-wide energy consumption value, pick the sector target that yields a first decrease in the network-wide customer experience value and a second decrease in the network-wide energy consumption value, wherein the second decrease in the network-wide energy consumption value is larger than the first decrease in the network-wide energy consumption value or pick the sector target that yields a second decrease in the network-wide customer experience value and the first decrease in the network-wide energy consumption value, wherein the second decrease in the network-wide customer experience value is larger than the first decrease in the network-wide customer experience value. The first decrease in the network-wide customer experience value may be 2 Mbps and/or the second decrease in the network-wide energy consumption value may 5%.

In some embodiments, the main outcome may hence be a graph depicting network-wide DAUT vs. energy consumption, and a shutdown configuration may be selected to achieve each combination of DAUT and energy consumption. Based on information of the graph, apparatus 122 may choose the shutdown configuration for each cell, i.e., the energy saving configuration, according to its policies regarding the DAUT and energy consumption balance, before actually commissioning any changes in cellular communication network 100, in particular RAN 110.

Apparatus 122 may thus select one of said multiple shutdown configurations for cell 114 based on the statistical CX values, the statistical amounts of saved energy, the simulated CX values and the simulated amounts of saved energy. Apparatus 122 may further configure cell 114 to perform cell shutdown in accordance with the selected shutdown configuration.

For example, apparatus may perform one or more of steps 272 - 276. At step 272, apparatus 122 may configure a shutdown window load threshold per sector. For example, apparatus 122 may configure cell 114 to perform cell shutdown in accordance with the shutdown window of the selected shutdown configuration.

At step 274, apparatus 122 may configure a CX and energy consumption per sector. For example, apparatus 122 may configure cell 114 to perform cell shutdown in accordance with the CX and energy consumption of the selected shutdown configuration.

At step 276, apparatus 122 may configure a network-wide CX and energy consumption. For example, apparatus 122 may configure cell 114 to perform cell shutdown in accordance with the network-wide CX and energy consumption of the selected shutdown configuration.

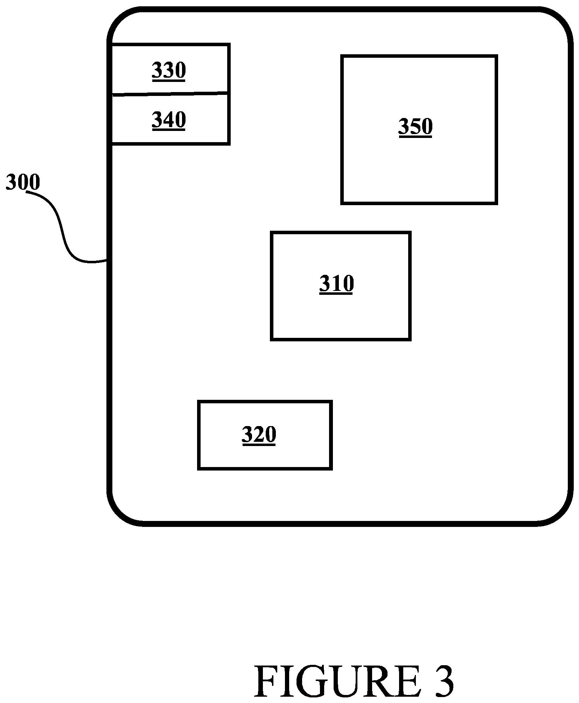

FIGURE 3 illustrates an example apparatus capable of supporting at least some embodiments. Illustrated is device 300, which may comprise, for example, apparatus 122 configured to perform the herein disclosed network optimization method. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one AMD Opteron and/or Intel Xeon processor. Processor 310 may comprise at least one application-specific integrated circuit, ASIC. Processor 310 may comprise at least one field-programmable gate array, FPGA. Processor 310 may be means for performing method steps in device 300, and causing performance of the method steps, such as determining, sorting and/or configuring. Processor 310 may be configured, at least in part by computer instructions, to perform actions.

As used in this application, the term circuitry covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be non-transitory.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with Ethernet and/or signalling system 7, SS7, standards, for example.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure alarm handling parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

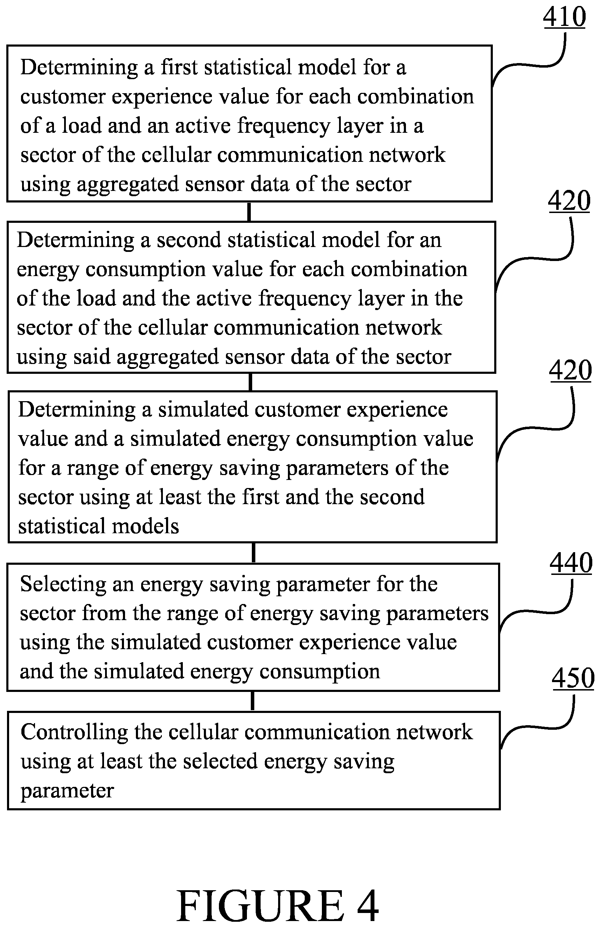

FIGURE 4 is a flow graph of a computer-implemented method for controlling a cellular communication network in accordance with at least some embodiments. The phases of the illustrated method may be performed for example by apparatus 122, or a control device configured the operation of apparatus 122, possibly when installed therein. The method may be a computer-implemented method.

At phase 410, the method may comprise determining a first statistical model for a customer experience value for each combination of a load and an active frequency layer in a sector of the cellular communication network using aggregated sector trend data of the sector. The method may further comprise, at step 420, determining a second statistical model for an energy consumption value for each combination of the load and the active frequency layer in the sector of the cellular communication network using said aggregated sector trend data of the sector. At step 430, the method may comprise determining a simulated customer experience value and a simulated energy consumption value for a range of load energy saving parameters of the sector using at least the first and the second statistical models. The method may comprise, at step 440, selecting an energy saving parameter for the sector from the range of energy saving parameters using the simulated customer experience value and the simulated energy consumption value. Finally, the method may comprise, at step 450, controlling the cellular communication network using at least the selected energy saving parameter.

It is to be understood that the embodiments of the invention disclosed are not limited to the particular structures, process steps, or materials disclosed herein. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in cellular communication networks.

### ACRONYMS LIST

- 3GPP: 3^{rd} Generation Partnership Project
- 5G: Fifth Generation
- AMF: Access and Mobility management Function
- CAL: Combination of Active Layers
- CPU: Central Processing Unit
- CX: Customer Experience
- DAUT: Downlink Average User Throughput
- IoT: Internet of Things
- KPI: Key Performance Indicator
- MIMO: Multiple Input Multiple Output
- ML: Machine Learning
- NR: New Radio
- OSS: Operational Support Systems
- PM: Performance Management
- PRB: Physical Resource Block
- QoS: Quality of Service
- RAN: Radio Access Network
- SLA: Service Level Agreement
- SON: Self Organizing Network
- UE: User Equipment
- WLAN: Wireless Local Area Network

### REFERENCE SIGNS LIST

| | |
|---|---|
| 100 | Cellular communication network |
| 110 | Radio Access Network |
| 112 | Base station |
| 114 | Cell |
| 116 | UE |
| 120 | Core network |
| 122 | Apparatus for configuring a cell |
| 210 - 276 | Steps in the block diagram of FIGURE 2 |
| 300 - 350 | Structure of the device of FIGURE 3 |
| 410 - 450 | Phases of the method of FIGURE 4 |

features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in cellular communication networks.

### ACRONYMS LIST

- 3GPP: 3^{rd} Generation Partnership Project
- 5G: Fifth Generation
- AMF: Access and Mobility management Function
- CAL: Combination of Active Layers
- CPU: Central Processing Unit
- CX: Customer Experience
- DAUT: Downlink Average User Throughput
- IoT: Internet of Things
- KPI: Key Performance Indicator
- MIMO: Multiple Input Multiple Output
- ML: Machine Learning
- NR: New Radio
- OSS: Operational Support Systems
- PM: Performance Management
- PRB: Physical Resource Block
- QoS: Quality of Service
- RAN: Radio Access Network
- SLA: Service Level Agreement
- SON: Self Organizing Network
- UE: User Equipment
- WLAN: Wireless Local Area Network

### REFERENCE SIGNS LIST

| | |
|---|---|
| 100 | Cellular communication network |
| 110 | Radio Access Network |
| 112 | Base station |
| 114 | Cell |
| 116 | UE |
| 120 | Core network |
| 122 | Apparatus for configuring a cell |
| 210 - 276 | Steps in the block diagram of FIGURE 2 |
| 300 - 350 | Structure of the device of FIGURE 3 |
| 410 - 450 | Phases of the method of FIGURE 4 |

## Claims

1. A computer-implemented method for controlling a cellular communication network (100), comprising:
- determining (410) a first statistical model for a customer experience value for each combination of a load and an active frequency layer in a sector of the cellular communication network (100) using aggregated sector trend data of the sector, wherein said aggregated sector trend data is generated by aggregating cell counters for sector-level;
- determining (420) a second statistical model for an energy consumption value for each combination of the load and the active frequency layer in the sector of the cellular communication network (100);
- **characterized in that** the second statistical model is determined using said aggregated sector trend data of the sector; and
- determining (430) a simulated customer experience value and a simulated energy consumption value for a range of energy saving parameters of the sector using at least the first and the second statistical models;
- selecting (440) an energy saving parameter for the sector from the range of energy saving parameters using the simulated customer experience value and the simulated energy consumption value; and
- controlling (450) the cellular communication network (100) using at least the selected energy saving parameter.

2. The method according to claim 1, further comprising:
- determining the simulated customer experience value and the simulated energy consumption value using at least one of a sector trend data of the sector or a sector load of the sector.

3. The method according to claim 2, wherein the sector trend data of the sector comprises at least one of a sector utilization of the sector or a data volume trend of the sector.

4. The method according to any of the preceding claims, further comprising:
- selecting the energy saving parameter for a simulated sector target of the sector, wherein the simulated sector target is a condition imposed by the customer experience value and/or the energy consumption value.

5. The method according to claim 4, further comprising:
- selecting the energy saving parameter using customer experience values and/or energy consumption values aggregated per sector and per each load threshold candidate.

6. The method according to any of the preceding claims, further comprising:
- selecting the energy saving parameter among all simulated energy saving parameters based on a criterion that is aligned with polices of an operator regarding a trade-off between the customer experience value and the energy consumption value.

7. The method according to any of the preceding claims, wherein the range of energy saving parameters comprises load thresholds between 5 and 20 Mbps, the range of load thresholds preferably being the same for all sectors in the cellular communication network (100).

8. The method according to any of the preceding claims, further comprising:
- controlling the cellular communication network (100) using a global target.

9. The method according to claim 8, wherein said controlling the cellular communication network (100) using a global target further comprises:
- controlling the cellular communication network (100) by selecting a sector target, from simulated customer experience values and simulated energy consumption values, that best fulfils the global target.

10. The method according to any of the preceding claims, further comprising:
- aggregating the customer experience value and the energy consumption value for all candidate sector targets over the cellular communication network (100); and
- picking a sector target that would best fulfil policies of an operator regarding a balance between the customer experience value and the energy consumption value.

11. The method according to claim 10, further comprising:
- picking the sector target that yields a zero decrease in a network-wide customer experience value and a first decrease in a network-wide energy consumption value;
- picking the sector target that yields a first decrease in the network-wide customer experience value and a second decrease in the network-wide energy consumption value, wherein the second decrease in the network-wide energy consumption value is larger than the first decrease in the network-wide energy consumption value; or
- picking the sector target that yields a second decrease in the network-wide customer experience value and the first decrease in the network-wide energy consumption value, wherein the second decrease in the network-wide customer experience value is larger than the first decrease in the network-wide customer experience value.

12. The method according to claim 11, wherein the first decrease in the network-wide customer experience value is 2 Mbps and/or the second decrease in the network-wide energy consumption value is 5%.

13. The method according to any of the preceding claims, wherein the customer experience value is a downlink average user throughput value.

14. The method according to any of the preceding claims, further comprising:
- determining the first and the second statistical models based on data from at least one day, preferably from at least one week, such as two weeks.

15. The method according to any of the preceding claims, wherein the energy saving parameter correlates with a load of the sector, the energy saving parameter preferably comprising at least one of a load threshold or a shutdown window.

## Patentansprüche

1. Computerimplementiertes Verfahren zur Steuerung eines zellularen Kommunikationsnetzwerks (100), umfassend:
- Bestimmen (410) eines ersten statistischen Modells für einen Kundenerlebenswert für jede Kombination aus einer Last und einer aktiven Frequenzschicht in einem Sektor des zellularen Kommunikationnetzwerks (100) unter Verwendung aggregierter Sektortrenddaten des Sektors, wobei die aggregierten Sektortrenddaten durch Aggragieren von Zellenzählern auf Sektorebene erzeugt werden;
- Bestimmen (420) eines zweiten statistischen Modells für einen Energieverbrauchswert für jede Kombination aus der Last und der aktiven Frequenzschicht im Sektor des zellularen Kommunikationnetzwerks (100);
- **dadurch gekennzeichnet, dass** das zweite statistische Modell unter Verwendung der aggregierten Sektortrenddaten des Sektors bestimmt wird; und
- Bestimmen (430) eines simulierten Kundenerlebniswerts und eines simulierten Energieverbrauchswerts für ein Bereich von Energiesparparametern des Sektors unter Verwendung mindestens des ersten und des zweiten statistischen Modells;
- Auswählen (440) eines Energiesparparameters für den Sektor aus dem Bereich von Energiesparparametern unter Verwendung des simulierten Kundenerlebniswerts und des simulierten Energieverbrauchswerts; und
- Steuern (450) des zellularen Kommunikationnetzwerks (100) unter Verwendung mindestens des ausgewählten Energiesparparameters.

2. Verfahren nach Anspruch 1, weiter umfassend:
- Bestimmen des simulierten Kundenerlebniswerts und des simulierten Energieverbrauchswerts durch Verwendung mindestens eines von Sektortrenddaten des Sektors oder Sektorlast des Sektors.

3. Verfahren nach Anspruch 2, wobei die Sektortrenddaten des Sektors mindestens eines von einer Sektorauslastung des Sektors oder einem Datenvolumentrend des Sektors umfassen.

4. Verfahren nach einem der vorstehenden Ansprüche, weiter umfassend:
- Auswählen des Energiesparparameters für ein simuliertes Sektorziel des Sektors, wobei das simulierte Sektorziel eine Bedingung ist, die durch den Kundenerlebniswert und/oder den Energieverbrauchswert auferlegt wird.

5. Verfahren nach Anspruch 4, weiter umfassend:
- Auswählen des Energiesparparameters unter Verwendung von Kundenerfahrungswerten und/oder Energieverbrauchswerten, die nach Sektor und für jeden Lastschwellenwertkandidaten aggregiert wurden.

6. Verfahren nach einem der vorstehenden Ansprüche, weiter umfassend:
- Auswählen des Energiesparparameters unter allen simulierten Energiesparparametern auf der Grundlage eines Kriteriums, das mit den Richtlinien eines Betreibers hinsichtlich des Kompromisses zwischen dem Kundenerlebniswert und dem Energieverbrauchswert im Einklang steht.

7. Verfahren nach einem der vorstehenden Ansprüche, wobei der Bereich der Energiesparparameter Lastschwellen zwischen 5 und 20 Mbit/s umfasst, wobei der Bereich der Lastschwellen vorzugsweise für alle Sektoren im zellularen Kommunikationsnetzwerk (100) gleich ist.

8. Verfahren nach einem der vorstehenden Ansprüche, weiter umfassend:
- Steuern des zellularen Kommunikationnetzwerks (100) unter Verwendung eines globalen Ziels.

9. Verfahren nach Anspruch 8, wobei das Steuern des zellularen Kommunikationnetzwerks (100) unter Verwendung eines globalen Ziels weiter umfasst:
- Steuern des zellularen Kommunikationnetzwerks (100) durch Auswählen eines Sektorziels aus simulierten Kundenerlebniswerten und simulierten Energieverbrauchswerten, welches das globale Ziel am besten erfüllt.

10. Verfahren nach einem der vorstehenden Ansprüche, weiter umfassend:
- Aggregieren des Kundenerlebniswerts und des Energieverbrauchswerts für alle Kandidatensektorziele über das zellulare Kommunikationsnetzwerk (100); und
- Herausgreifen eines Sektorziels, das die Richtlinien eines Betreibers hinsichtlich eines Gleichgewichts zwischen dem Kundenerlebniswert und dem Energieverbrauchswert am besten erfüllt.

11. Verfahren nach Anspruch 10, weiter umfassend:
- Herausgreifen des Sektorziels, das einen Rückgang von null beim netzwerkweiten Kundenerlebniswert und einen ersten Rückgang beim netzwerkweiten Energieverbrauchswert ergibt;
- Herausgreifen des Sektorziels, das einen ersten Rückgang des netzwerkweiten Kundenerlebniswerts und einen zweiten Rückgang des netzwerkweiten Energieverbrauchswerts ergibt, wobei der zweite Rückgang des netzwerkweiten Energieverbrauchswerts größer ist als der erste Rückgang des netzwerkweiten Energieverbrauchswerts; oder
- Herausgreifen des Sektorziels, das einen zweiten Rückgang des netzwerkweiten Kundenerlebniswerts und den ersten Rückgang des netzwerkweiten Energieverbrauchswerts ergibt, wobei der zweite Rückgang des netzwerkweiten Kundenerlebniswerts größer ist als der erste Rückgang des netzwerkweiten Kundenerlebniswerts.

12. Verfahren nach Anspruch 11, wobei der erste Rückgang des netzwerkweiten Kundenerlebniswerts 2 Mbit/s beträgt und/oder der zweite Rückgang des netzweiten Energieverbrauchswertes 5% beträgt.

13. Verfahren nach einem der vorstehenden Ansprüche, wobei der Kundenerlebniswert ein durchschnittlicher Downlink-Benutzerdurchsatzwert ist.

14. Verfahren nach einem der vorstehenden Ansprüche, weiter umfassend:
- Bestimmen des ersten und des zweiten statistischen Modells auf der Grundlage von Daten aus mindestens einem Tag, vorzugsweise aus mindestens einer Woche, wie beispielsweise zwei Wochen.

15. Verfahren nach einem der vorstehenden Ansprüche, wobei der Energiesparparameter mit einer Last des Sektors korreliert, wobei der Energiesparparameter vorzugsweise mindestens eine Lastschwelle oder ein Abschaltfenster umfasst.

## Revendications

1. Procédé mis en œuvre par ordinateur pour commander un réseau de communication cellulaire (100), comprenant :
- la détermination (410) d'un premier modèle statistique pour une valeur d'expérience client pour chaque combinaison d'une charge et d'une couche de fréquence active dans un secteur du réseau de communication cellulaire (100) en utilisant des données de tendance de secteur agrégées du secteur, dans lequel lesdites données de tendance de secteur agrégées sont générées en agrégeant des compteurs de cellules pour un niveau de secteur ;
- la détermination (420) d'un second modèle statistique pour une valeur de consommation d'énergie pour chaque combinaison de la charge et de la couche de fréquence active dans le secteur du réseau de communication cellulaire (100) ;
- **caractérisé en ce que** le second modèle statistique est déterminé en utilisant lesdites données de tendance de secteur agrégées du secteur ; et
- la détermination (430) d'une valeur d'expérience client simulée et d'une valeur de consommation d'énergie simulée pour une gamme de paramètres d'économie d'énergie du secteur en utilisant au moins les premier et second modèles statistiques ;
- la sélection (440) d'un paramètre d'économie d'énergie pour le secteur parmi la gamme de paramètres d'économie d'énergie en utilisant la valeur d'expérience client simulée et la valeur de consommation d'énergie simulée ; et
- la commande (450) du réseau de communication cellulaire (100) en utilisant au moins le paramètre d'économie d'énergie sélectionné.

2. Procédé selon la revendication 1, comprenant en outre :
- la détermination de la valeur d'expérience client simulée et de la valeur de consommation d'énergie simulée en utilisant au moins une parmi des données de tendance de secteur du secteur ou une charge de secteur du secteur.

3. Procédé selon la revendication 2, dans lequel les données de tendance de secteur du secteur comprennent au moins une parmi une utilisation de secteur du secteur ou une tendance de volume de données du secteur.

4. Procédé selon l'une quelconque des revendications précédentes, comprenant en outre :
- la sélection du paramètre d'économie d'énergie pour un objectif de secteur simulé du secteur, dans lequel l'objectif de secteur simulé est une condition imposée par la valeur d'expérience client et/ou la valeur de consommation d'énergie.

5. Procédé selon la revendication 4, comprenant en outre :
- la sélection du paramètre d'économie d'énergie en utilisant des valeurs d'expérience client et/ou des valeurs de consommation d'énergie agrégées par secteur et par seuil de charge candidat.

6. Procédé selon l'une quelconque des revendications précédentes, comprenant en outre :
- la sélection du paramètre d'économie d'énergie parmi tous les paramètres d'économie d'énergie simulés sur la base d'un critère qui est aligné sur les politiques d'un opérateur concernant un compromis entre la valeur d'expérience client et la valeur de consommation d'énergie.

7. Procédé selon l'une quelconque des revendications précédentes, dans lequel la gamme de paramètres d'économie d'énergie comprend des seuils de charge compris entre 5 et 20 Mbps, la plage de seuils de charge étant de préférence la même pour tous les secteurs dans le réseau de communication cellulaire (100).

8. Procédé selon l'une quelconque des revendications précédentes, comprenant en outre :
- la commande du réseau de communication cellulaire (100) en utilisant un objectif global.

9. Procédé selon la revendication 8, dans lequel ladite commande du réseau de communication cellulaire (100) en utilisant un objectif global comprend en outre :
- la commande du réseau de communication cellulaire (100) en sélectionnant un objectif de secteur, à partir de valeurs d'expérience client simulées et de valeurs de consommation d'énergie simulées, qui remplit le mieux l'objectif global.

10. Procédé selon l'une quelconque des revendications précédentes, comprenant en outre :
- l'agrégation de la valeur d'expérience client et de la valeur de consommation d'énergie pour tous les objectifs de secteur candidats sur le réseau de communication cellulaire (100) ; et
- le choix d'un objectif de secteur qui répondrait le mieux aux politiques d'un opérateur concernant un équilibre entre la valeur d'expérience client et la valeur de consommation d'énergie.

11. Procédé selon la revendication 10, comprenant en outre :
- le choix de l'objectif de secteur qui entraîne une non-diminution d'une valeur d'expérience client à l'échelle du réseau et une première diminution d'une valeur de consommation d'énergie à l'échelle du réseau ;
- le choix de l'objectif de secteur qui entraîne une première diminution de la valeur d'expérience client à l'échelle du réseau et une seconde diminution de la valeur de consommation d'énergie à l'échelle du réseau, dans lequel la seconde diminution de la valeur de consommation d'énergie à l'échelle du réseau est supérieure à la première diminution de la valeur de consommation d'énergie à l'échelle du réseau ; ou
- le choix de l'objectif de secteur qui entraîne une seconde diminution de la valeur d'expérience client à l'échelle du réseau et la première diminution de la valeur de consommation d'énergie à l'échelle du réseau, dans lequel la seconde diminution de la valeur d'expérience client à l'échelle du réseau est supérieure à la première diminution de la valeur d'expérience client à l'échelle du réseau.

12. Procédé selon la revendication 11, dans lequel la première diminution de la valeur d'expérience client à l'échelle du réseau est de 2 Mbit/s et/ou la seconde diminution de la valeur de consommation d'énergie à l'échelle du réseau est de 5 %.

13. Procédé selon l'une quelconque des revendications précédentes, dans lequel la valeur d'expérience client est une valeur de débit utilisateur moyen en liaison descendante.

14. Procédé selon l'une quelconque des revendications précédentes, comprenant en outre :
- la détermination des premier et second modèles statistiques sur la base de données provenant d'au moins une journée, de préférence d'au moins une semaine, par exemple deux semaines.

15. Procédé selon l'une quelconque des revendications précédentes, dans lequel le paramètre d'économie d'énergie est corrélé à une charge du secteur, le paramètre d'économie d'énergie comprenant de préférence au moins un parmi un seuil de charge ou une fenêtre d'arrêt.
